# EUROPEAN PATENT SPECIFICATION

(11) **EP 0 670 510 B1**
(45) Date of publication and mention of the grant of the patent: **11.09.2002**
(21) Application number: 95301319.0
(22) Date of filing: 01.03.1995
(51) Int. Cl.: G02F 1/29, G02F 1/035, G02F 1/1337, G02F 1/135

(54) **Liquid crystal spatial light phase modulator**
Optischer, räumlicher Flüssigkristall-Phasenmodulator
Modulateur spatial de phase optique à cristal liquide

(30) Priority: 02.03.1994 GB 9404001
(43) Date of publication of application: 06.09.1995
(73) Proprietor: SHARP KABUSHIKI KAISHA, Osaka-shi, Osaka-fu 545-0013 (JP)
(72) Inventor: May, Paul, Abingdon, Oxon, OX14 2NS (GB); Davis, Gillian, Abingdon, Oxon, OX14 1LZ (GB)
(74) Representative: Robinson, John Stuart

(56) References cited:
- EP-A- 0 546 891
- EP-A- 0 558 801
- US-A- 3 819 248
- US-A- 3 832 033
- US-A- 4 576 441
- US-A- 5 278 924
- US-A- 5 317 446
- APPLIED OPTICS, vol. 12, no. 7, July 1973 NEW YORK, US, pages 1472-1476, T.MOTOKI 'Low Voltage Optical Modulator Using Electrooptically Induced Phase Gratings'
- JAPANESE JOURNAL OF APPLIED PHYSICS, vol. 27, no. 2, February 1988 TOKYO, JP, pages L129-L131, K.YOSHINO ET AL. 'Characteristics of Ferroelectric Liquid Crystal Sandwiched between Drawn and Poled Polyvinylidine Fluoride Thin Films'
- APPLIED PHYSICS LETTERS, vol. 23, no. 7, 1 October 1973 NEW YORK, US, pages 361-362, Y.FURUHATA ET AL. 'New Liquid-Crystal Method for Revealing Ferroelectric Domains'
- SOVIET JOURNAL OF QUANTUM ELECTRONICS, vol. 8, no. 9, September 1978 NEW YORK, US, pages 1078-1081, V.I.BALAKSHII ET AL. 'Amplitude Modulation of Light by Diffraction on Ba2NaNb5O15'
- PROCEEDINGS OF THE SPIE, vol. 2150, 24 January 1994 BELLINGHAM, US, pages 243-246, FENG-ZHEN GUO ET AL. 'Wide Sideband Generation by Quasi-Velocity-Matched Electrooptic Modulator Using Periodic Domain Inversion'
- JOURNAL OF OPTICAL COMMUNICATION, vol. 3, no. 2, June 1982 BERLIN, DE, pages 52-58, T.SUETA ET AL. 'High Speed Guided-Wave Optical Modulators'

## Description

The present invention relates to a liquid crystal spatial light phase modulator.

GB 2 173 605 and EP 0 486 769 both disclose optical devices which comprise a pair of elements having their optic axes arranged in different directions. GB 2 173 605 further describes providing a pair of electrodes in order to apply an electric field to the elements in order to control an optical condition of at least one of the first and second elements, for example, where electro-optic materials are used, to control the refractive indices thereof. The use of a single layer of liquid crystal material is also disclosed. In the GB 2 173 605 disclosure, in each embodiment in which electro-optic materials are used, the device comprises two separate elements, each of which is etched in a periodic pattern.

US 3 832 033 discloses a ferroelectric-liquid crystal composite device for converting a thermal image to an optical image. The device comprises a regular ferroelectric single crystal substrate in contact with a liquid crystal film. A small electric field, which is less than the coercive field at room temperature, is applied across the device. A thermal image is projected onto the ferroelectric substrate, in which it causes domain inversions. The liquid crystal is aligned by the pattern of domain inversions corresponding to the thermal image. The image is made visible by directing linearly polarised light into the device and analysing the light emerging from the device with another polariser.

The features of the preamble of claim 1 are known in combination from that document.

According to the invention, there is provided electrically controllable liquid crystal spatial light phase modulator comprising a liquid crystal layer in contact with a first surface of an electro-optic material and means for applying an electric field across the liquid crystal layer and the electro-optic material, the electro-optic material comprises a plurality of first and second regions extending from the first surface, the direction of polarisation of the first regions being oriented in a first direction substantially perpendicular to the first surface and the direction of polarisation of the second regions being oriented in a second direction substantially opposte the first direction in the absence of an applied electric field, the field applying means being arranged to apply the electric field so as to switch off a pattern of phase shifts which exists in the absence of an applied field, wherein the electro-optic material and the means for applying an electric field across the liquid crystal layer and the electro-optic material are such that the applied electric field does not alter the directions of polarisation of the first and second regions.

The liquid crystal layer may compromise a ferroelectric liquid crystal.

The means for applying an electric field may comprise first and second transparent electrodes.

It is thus possible to provide a device in which the effect of the domain inversion pattern is effectively amplified by the liquid crystal layer. By applying a sufficiently large electric field across the liquid crystal layer, the device can effectively be switched off.

Furthermore, the properties of the device rely on the pattern of the first and second domains and not on having to form complex electrode patterns. Thus the need to provide patterned electrodes is avoided.

The present invention will further be described, by way of example, with reference to the accompanying drawings, in which:

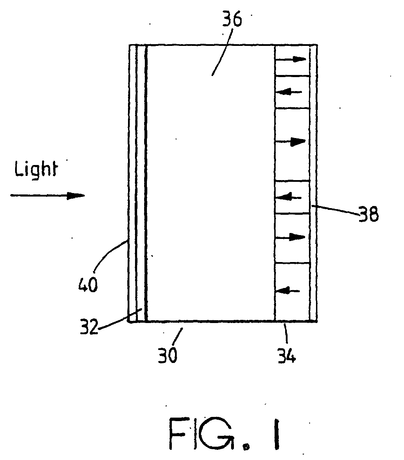

Figure 1 is a schematic diagram of a liquid crystal spatial light phase modulator constituting an embodiment of the present invention.

A domain inversion pattern in an electro-optic material can be enhanced, thereby allowing thinner slabs of electro-optic material to be used, if the electro-optic material is used to define one wall of a liquid crystal cell, as shown in Figure 1. A ferroelectric liquid crystal cell 30 having one side formed using a conventional aligning film 32 and the other side formed of electro-optic material 34 having a fixed domain inversion pattern formed therein causes the liquid crystal 36 to align in one of two states at the surface of the electro-optic material in accordance with the domain inversion pattern. Application of an electric field across the cell, via transparent electrodes 38 and 40, aligns the liquid crystal 36 with the electric field, and thereby switches off the pattern of phase shifts. Cells of only a few microns thickness and having slabs of electro-optic material patterned to a depth of approximately 1 micron thickness or less are thus able to provide electrically controllable spatial light phase modulators.

Many methods exist to create a spatially varying domain structure, i.e. a domain inversion pattern, within the electro-optic material 34. These include direct field reversal (polarising), electron beam written inversion, ion exchange reversal and optically written domains through internal fields induced by charge separation in photorefractive materials. Ion exchange in non-centrosymmetric crystals may be used to lower the Curie temperature for domain inversion along the optic axis in ion exchanged regions of the electro-optic material 34. Thus lithographically defined domain inversion may be performed to create the domain inversion pattern. Fabrication of a domain inversion pattern is described in a paper entitled "Quasi-phase-matched second harmonic generation in a MiTaO₃ waveguide" Kazuhisa Yamamoto, Kiminori Mizuuchi and Tetsuo Taniuchi, IEEE journal of quantum electronics, vol 28, no. 9, September 1992. Variations in refractive index formed between ion exchanged and non-ion exchanged regions may be reduced or removed by annealing. Direct writing of inverted domains using electron beam lithography has the advantage of avoiding the changes in refractive index asociated with ion exchange techniques and also allows relatively deep inverted regions to be formed. For example, lithium niobate substrates 1mm thick have been completely inverted by electron beam writing of one surface of the substrate.

The pattern of the first and second domains may be arranged to form a phase hologram which is arranged to act as a lens, a beam steering device, Fourier plane filters, a Fresnel type zone lens, or which forms a binary optic device.

It is thus possible to provide a very versatile electrically controllable optical device.

## Claims

1. An electrically controllable liquid crystal spatial light phase modulator comprising a liquid crystal layer (36) in contact with a first surface of an electro-optic material (34) and means (38,40) for applying an electric field across the liquid crystal layer (36) and the electro-optic material (34), the electro-optic material (34) comprising a plurality of first and second regions extending from the first surface, the direction of polarisation of the first regions being oriented in a first direction substantially perpendicular to the first surface and the direction of polarisation of the second regions being oriented in a second direction substantially opposite the first direction in the absence of an applied electric field, the field applying means (38, 40) being arranged to apply the electric field so as to switch off a pattern of phase shifts which exists in the absence of an applied field, **characterised in that** the electro-optic materials and the means for applying an electric field across the liquid crystal layer and the electro-optic material are such that the applied electric field does not alter the directions of polarisation of the first and second regions.

2. A modulator as claimed in claim 2, **characterised in that** the liquid crystal layer (36) comprises a ferroelectric liquid crystal.

3. A modulator as claimed in claim 1 or 2, **characterised in that** the means for applying an electric field comprise first and second transparent electrodes (38, 40).

## Patentansprüche

1. Elektronisch steuerbarer Flüssigkristall-Raumlicht-Phasenmodulator mit einer Flüssigkristallschicht (36) in Kontakt mit einer ersten Fläche eines elektrooptischen Materials (34) und einer Einrichtung (38, 40) zum Anlegen eines elektrischen Felds an die Flüssigkristallschicht (36) und das elektrooptische Material (34), wobei das elektrooptische Material (34) eine Anzahl erster und zweiter Bereiche aufweist, die sich von der ersten Fläche aus erstrecken, wobei die Polarisationsrichtung der ersten Bereiche in einer ersten Richtung im Wesentlichen rechtwinklig zur ersten Fläche ausgerichtet ist und die Polarisationsrichtung der zweiten Richtung in einer zweiten Richtung im Wesentlichen entgegengesetzt zur ersten Richtung ausgerichtet ist, wenn ein angelegtes elektrisches Feld fehlt, wobei die Feldanlegeeinrichtung (38, 40) so angeordnet ist, dass sie das elektrische Feld so anlegt, dass das Muster von Phasenverschiebungen ausgeschaltet wird, wie es beim Fehlen eines angelegten Felds existiert, **dadurch gekennzeichnet, dass** die elektrooptischen Materialien und die Einrichtung zum Anlegen eines elektrischen Felds an die Flüssigkristallschicht und das elektrooptische Material dergestalt sind, dass das angelegte elektrische Feld die Polarisationsrichtungen der ersten und zweiten Bereiche nicht ändert.

2. Modulator nach Anspruch 2, **dadurch gekennzeichnet, dass** die Flüssigkristallschicht (36) einen ferroelektrischen Flüssigkristall aufweist.

3. Modulator nach Anspruch 1 oder 2, **dadurch gekennzeichnet, dass** die Einrichtung zum Anlegen eines elektrischen Felds eine erste und eine zweite transparente Elektrode (38, 40) aufweist.

## Revendications

1. Modulateur spatial de phase optique à cristal liquide électriquement réglable comprenant une couche de cristal liquide (36) en contact avec une première surface d'un matériau électro-optique (34) et des moyens (38, 40) pour appliquer un champ électrique aux bornes de la couche de cristal liquide (36) et du matériau électro-optique (34), le matériau optique (34) comprenant une pluralité de premières et deuxièmes régions s'étend depuis la première surface, la direction de polarisation des premières régions étant orientée dans une première direction sensiblement perpendiculaire à la première surface et la direction de polarisation des deuxièmes régions étant orientée dans une deuxième direction sensiblement opposée à la première direction en l'absence d'un champ électrique appliqué, les moyens d'application de champ (38, 40) étant aménagés pour appliquer le champ électrique de manière à déconnecter un motif de décalages de phase qui existe en l'absence d'un champ appliqué, **caractérisé en ce que** le matériau électro-optique et les moyens permettant d'appliquer un champ électrique aux bornes de la couche de cristal liquide et du matériau électro-optique sont tels que le champ électrique appliqué ne modifie pas les directions de polarisation des premières et deuxièmes régions.

2. Modulateur selon la revendication 1, **caractérisé en ce que** la couche de cristal liquide (36) comprend un cristal liquide ferroélectrique.

3. Modulateur selon la revendication 1 ou 2, **caractérisé en ce que** les moyens d'application d'un champ électrique comprennent une première et une seconde électrodes transparentes (38, 40).
